# EUROPEAN PATENT APPLICATION

(11) **EP 4 672 100 A1**
(43) Date of publication of application: **31.12.2025**
(21) Application number: 24792525.8
(22) Date of filing: 05.04.2024
(51) Int. Cl.: G06Q 10/00, F24F 11/64

(54) **INFORMATION PROCESSING DEVICE, INFORMATION PROCESSING METHOD, AND COMPUTER PROGRAM**

(30) Priority: 17.04.2023 JP 2023067319
(71) Applicant: DAIKIN INDUSTRIES, LTD., Osaka 530-0001 (JP)
(72) Inventor: SATO, Daisuke, Osaka-shi, Osaka 530-0001 (JP); KANAYAMA, Hiroaki, Osaka-shi, Osaka 530-0001 (JP); SABU, Shunsuke, Osaka-shi, Osaka 530-0001 (JP)
(74) Representative: Goddar, Heinz J.
(86) International application number: PCT/JP2024/014026
(87) International publication number: WO 2024/219250

(57) **Abstract**

To provide an information processing device, an information processing method, and a computer program.

An acquisition unit is provided, and the acquisition unit acquires spatial shape data of a target space obtained by measuring the target space and temperature distribution data obtained by measuring a temperature distribution of the target space in association with each other.

## Description

### [Technical Field]

The present invention relates to an information processing device, an information processing method, and a computer program.

### [Background Art]

Patent Literature 1 discloses the configuration in which air conditioning operation data, room information including components, and environment information data are acquired and data of a heat load calculated for each component on the basis of the acquired data is output.

### [Prior Art Document]

### [Patent Document]

[Patent Literature 1] International Publication No. 2017/029755

### [Summary of Invention]

### [Problems to be Solved by Invention]

In Patent Literature 1, it is not possible to calculate heat load data estimated to flow in or flow out for each component unless three pieces of information, i.e., the air conditioning operation data, the room information including components, and the environment information data are used.

An object of the present disclosure is to provide an information processing device, an information processing method, and a computer program, in which less information is used to specify thermal information for each component of a space.

### [Means for Solving Problems]

An information processing device according to a first aspect of the present disclosure includes an acquisition unit that acquires spatial shape data of a target space obtained by measuring the target space and temperature distribution data obtained by measuring a temperature distribution of the target space in association with each other.

An information processing device according to a second aspect of the present disclosure is preferably configured to, in the information processing device according to the first aspect, include a processing unit that generates a three-dimensional space model of the target space based on the spatial shape data and the temperature distribution data acquired in association with each other by the acquisition unit.

An information processing device according to a third aspect of the present disclosure is preferably configured such that, in the information processing device according to the second aspect, the processing unit outputs target space data in which at least one of heat insulation property, an air leakage spot, and solar radiation inflow in the target space is specified.

An information processing device according to a fourth aspect of the present disclosure is preferably configured such that, in the information processing device according to the second aspect or third aspect, the acquisition unit acquires outside air data, and the processing unit calculates at least one of the heat insulation property, the air leakage spot, and the solar radiation inflow based on the acquired outside air data.

An information processing device according to a fifth aspect of the present disclosure is preferably configured such that, in the information processing device according to any one of the second aspect to the fourth aspect, the processing unit performs at least one of device selection, device arrangement, and airflow control of an air conditioner in accordance with a location in the target space based on at least one of the calculated heat insulation property, the calculated air leakage spot, and the calculated solar radiation inflow.

An information processing device according to a sixth aspect of the present disclosure is preferably configured such that, in the information processing device according to any one of the second aspect to the fifth aspect, the processing unit proposes repair of the target space based on at least one of the calculated heat insulation property, the calculated air leakage spot, and the calculated solar radiation inflow.

An information processing device according to a seventh aspect of the present disclosure is preferably configured such that, in the information processing device according to any one of the second aspect to the sixth aspect, the acquisition unit acquires outside air data, and the processing unit estimates an air-conditioning load for air-conditioning the target space based on the acquired outside air data and the target space data, selects a device capacity and a model of an air conditioner based on an estimation result, and estimates power consumption of the selected air conditioner.

An information processing device according to an eighth aspect of the present disclosure is preferably configured such that, in the information processing device according to the sixth aspect, the processing unit estimates power consumption of an air conditioner in a case where heat insulation repair or airtightness repair of the target space is performed.

An information processing device according to a ninth aspect of the present disclosure is preferably configured such that, in the information processing device according to the sixth aspect, the processing unit receives a selection as to which of an initial cost of the air conditioner, a running cost, a temperature condition, a humidity condition, and comfort of the target space is prioritized, and recommends heat insulation repair or airtightness repair in accordance with the received selection.

An information processing method according to a tenth aspect of the present disclosure causes a computer to execute a process including acquiring spatial shape data of a target space obtained by measuring the target space and temperature distribution data obtained by measuring a temperature distribution of the target space in association with each other.

A computer program according to an eleventh aspect of the present disclosure causes a computer to execute a process including acquiring spatial shape data of a target space obtained by measuring the target space and temperature distribution data obtained by measuring a temperature distribution of the target space in association with each other.

### [Effects of Invention]

According to the present disclosure, it is possible to use less information to specify thermal information for each component of a space.

### [Brief Description of Drawings]

[Fig. 1] Fig. 1 is a block diagram illustrating a configuration example of an information processing system according to an embodiment.
[Fig. 2] Fig. 2 is a schematic view illustrating a configuration example of a measurement device according to the embodiment.
[Fig. 3] Fig. 3 is a flow chart illustrating a procedure for generating a three-dimensional shape model.
[Fig. 4] Fig. 4 is a schematic view illustrating a configuration example of a learning model for object recognition.
[Fig. 5] Fig. 5 is a schematic view illustrating a display example of a three-dimensional space model.
[Fig. 6] Fig. 6 is a flow chart illustrating a procedure for selecting an air conditioner executed by the information processing device according to a second embodiment.
[Fig. 7] Fig. 7 is a conceptual diagram of an air conditioner table.
[Fig. 8] Fig. 8 is a schematic view illustrating an output example of air conditioner information.
[Fig. 9] Fig. 9 is a schematic view illustrating a priority item selection screen.

### [Mode for Carrying out Invention]

An air-conditioning-related device and an air-conditioning system according to the present embodiment of the present disclosure will be described below with reference to the drawings. The outline of the present embodiment is as follows.

During a visit to a customer's property and business activities related to air conditioning, airflow analysis is performed under the conditions of the actual property so that problems in the air environment, such as temperature unevenness and stagnation, which are considered to have actually occurred in the customer's property, can be clarified and then a device can be proposed. However, when a fluid calculation model for actually performing airflow analysis is created, it takes a lot of time to measure and model indoor shapes and furniture and fixtures and to set conditions such as a heat source.

As a way for solving the problem, a method for automatically creating a fluid calculation model is proposed. As an example of the system, images are captured while walking in a space by using a handheld depth camera, a camera, thermography, and a smartphone integrated module, and depth images, images, and thermographic images in the space are stored in a smartphone. The data stored in the smartphone is transferred to an information processing device 1, and three-dimensional point cloud data is created using software for three-dimensional reconstruction. A floor, a wall, and a ceiling are detected from the three-dimensional point cloud data, and a fluid calculation model, which is a space model of a surface, is created. Here, the type (air conditioner, furniture and fixtures, or the like) and the position of an object are specified by performing image recognition, which is learned in advance by machine learning on captured images, and are applied to the three-dimensional space model. Images may be captured by using a cleaning robot, a drone, or the like, instead of image capturing by a person holding the device.

### (First Embodiment)

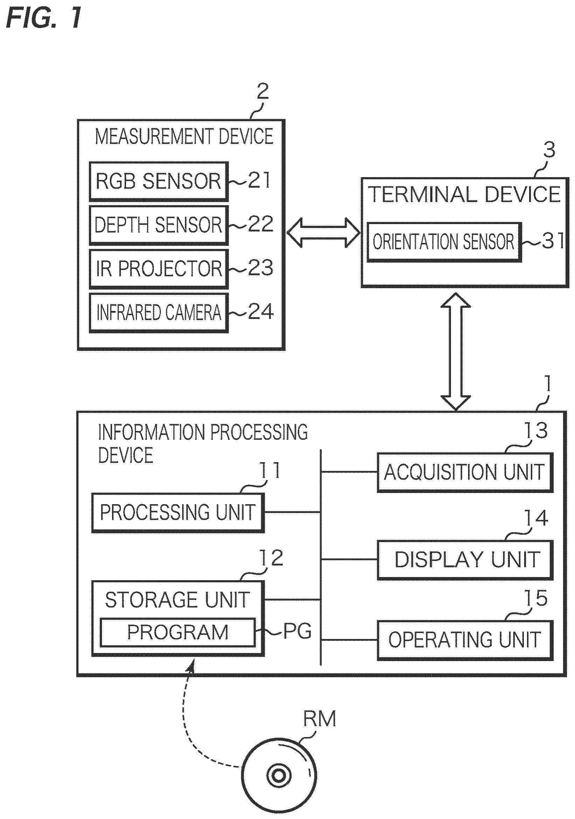

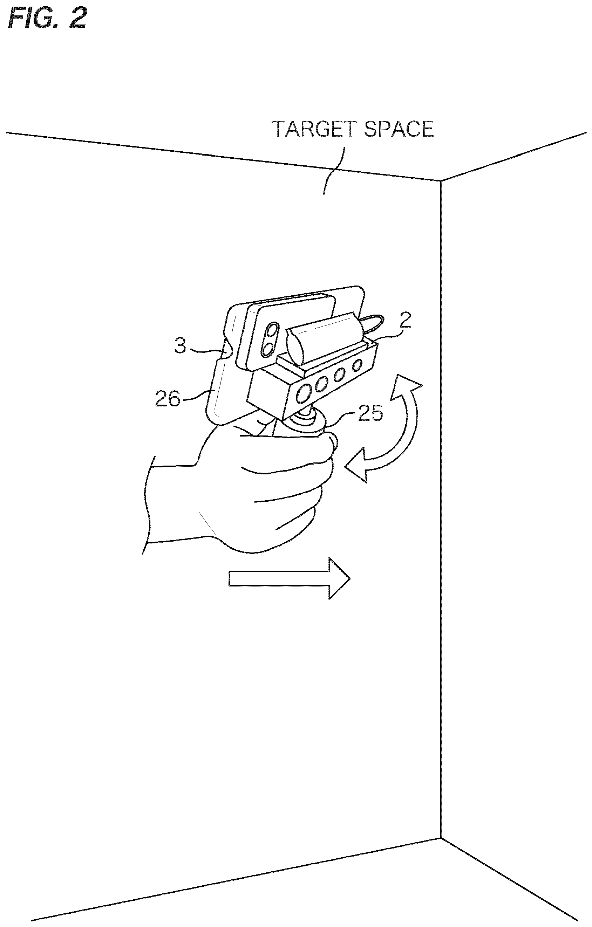

Fig. 1 is a block diagram illustrating a configuration example of an information processing system according to an embodiment, and Fig. 2 is a schematic view illustrating a configuration example of a measurement device according to the embodiment. The information processing system according to the present embodiment includes the information processing device 1, a measurement device 2, and a terminal device 3. The information processing system captures images and measures the distance of a space having a surface in at least a part thereof and semiautomatically creates a three-dimensional space model for predicting the environment of the space based on data obtained by measurement. Hereinafter, the space to be modeled is referred to as a target space.

The measurement device 2 includes an RGB sensor 21, a depth sensor 22, an IR projector 23, an infrared camera 24, a gripping unit 25, and a terminal holding unit 26.

The RGB sensor 21 is a camera that includes an imaging element such as a CMOS sensor or a CCD sensor and captures color images of the target space. The RGB sensor 21 can capture moving images. The RGB sensor 21 outputs time-series image data (RGB data) obtained by capturing the target space. It is assumed that the time-series image data forming the moving image includes time data indicating the capturing date and time.

The depth sensor 22 measures the distance (depth) from the measurement device 2 to a wall surface in the target space and various objects included in the target space. The depth sensor 22 outputs the depth data indicating the depth obtained by distance measurement. The IR projector 23 is an element that projects infrared rays onto the target space and the object in order to obtain more accurate depth data.

The infrared camera 24 is a camera that includes an infrared imaging element and captures the target space with infrared rays. The infrared camera 24 outputs thermographic image data obtained by capturing the target space.

The gripping unit 25 is a rod-like member to be gripped by a user of the measurement device 2. The terminal holding unit 26 is a member that holds the terminal device 3.

The measurement device 2 configured as described above outputs the image data, the depth data, and the thermographic image data to the terminal device 3. The measurement device 2 may store the image data, the depth data, and the thermographic image data in an external portable storage device. The measurement device 2 may directly transmit the image data, the depth data, and the thermographic image data to the information processing device 1.

The terminal device 3 is, for example, a portable information processing terminal such as a smartphone or a tablet terminal. The terminal device 3 includes an input interface to which the image data, the depth data, the thermographic image, and the orientation data are input. The terminal device 3 includes an orientation sensor 31.

The orientation sensor 31 is a compass such as an electronic compass and outputs the orientation data indicating the orientation of the measurement device 2.

The content of the orientation data is not limited as long as the orientation data is information with which the orientation of the target space can be specified. For example, the orientation data may be information based on the latitude, longitude, and time of the target space and the position of the celestial body. The celestial body is an object existing in the universe whose position on the celestial sphere is known and which can be captured. The celestial body is, for example, the sun, the moon, or an artificial satellite. When the captured image includes a celestial body whose position on the celestial sphere is known, and the latitude and longitude of the captured target space and the capturing time are known, the orientation of the target space can be specified.

The orientation data may be information based on the latitude, longitude, and time of the target space and the direction and length of the indoor shadow. Since the position of the sun is specified from the direction and the length of the shadow, it is possible to specify the orientation of the target space as described above.

The terminal device 3 causes a display device to display the image captured by the measurement device 2 based on the image data input via an input interface. The terminal device 3 stores the input image data, the depth data, the thermographic image, and the orientation data obtained by the orientation sensor 31 and transmits the data to the information processing device 1 at appropriate timing. The terminal device 3 may be configured to store the input image data, the depth data, the thermographic image, and the orientation data obtained by the orientation sensor 31 in a portable storage device.

With the measurement device 2 configured as described above, the user holds the measurement device 2, moves in the target space, and orients the measurement device 2 in various directions and thus can capture images and measure distances of a wall surface, a floor surface, a ceiling surface, and an object in the target space from a plurality of positions and directions. The measurement device 2 provides the obtained image data, depth data, thermographic image data, and orientation data to the information processing device 1 via the terminal device 3. Hereinafter, the image data, the depth data, and the orientation data obtained by measuring the target space from various positions are also referred to as spatial shape data of the target space. The thermographic image data obtained by measuring the temperature distribution in the target space is also referred to as temperature distribution data.

The information processing device 1 includes a processing unit 11, a storage unit 12, an acquisition unit 13, a display unit 14, and an operating unit 15.

The processing unit 11 is a processor including an arithmetic circuit such as a central processing unit (CPU), a micro-processing unit (MPU), an application specific integrated circuit (ASIC), or a field-programmable gate array (FPGA), an internal storage device such as a read only memory (ROM) or a random access memory (RAM), an I/O terminal, and the like. The processing unit 11 may include one or more arithmetic circuits such as a graphics processing unit (GPU), a tensor processing unit (TPU), or an AI chip (semiconductor for AI) specialized for image processing related to object detection and image recognition. The processing unit 11 reads and executes a program PG stored in the storage unit 12 to acquire the spatial shape data of the target space obtained by measuring the target space and the temperature distribution data obtained by measuring the temperature distribution of the target space in association with each other. Further, the processing unit 11 reads and executes the program PG stored in the storage unit 12 to create a three-dimensional space model of the target space based on the spatial shape data and the temperature distribution data acquired in association with each other. Each of the functional units related to the creation of the three-dimensional space model may be implemented by software, or some or all of the functional units may be implemented by hardware.

The storage unit 12 is, for example, a storage such as a hard disk, an electrically erasable programmable ROM (EEPROM), or a flash memory. The storage unit 12 stores various programs executed by the processing unit 11 and various types of data necessary for processing by the processing unit 11. According to the present embodiment, the storage unit 12 stores at least the program PG executed by the processing unit 11.

The program PG may be written in the storage unit 12 at the stage of manufacturing the information processing device 1, or may be distributed from the different information processing device 1 or the like via a network. The information processing device 1 acquires the program PG through communication and writes the program PG in the storage unit 12. The program PG may be recorded in a readable manner in a recording medium RM such as a semiconductor memory such as a flash memory, an optical disk, a magneto-optical disk, or a magnetic disk. The information processing device 1 reads the program PG from the recording medium RM using a reading device (not illustrated) and stores the read program PG in the storage unit 12.

The acquisition unit 13 is a communication circuit that transmits and receives data to and from an external device in a wired or wireless manner, or a reading circuit that reads data from a portable storage device. The information processing device 1 acquires the spatial shape data and the temperature distribution data of the target space in association with each other from the measurement device 2 via the acquisition unit 13. That is, the information processing device 1 acquires, as a series of data, the image data, the depth data, the orientation data, and the thermographic image data measured by the measurement device 2 and the terminal device 3.

The information processing device 1 may acquire the duct system diagram data representing a duct system related to an inlet port or a blow-out port of a ventilation device in the target space from an external device via the acquisition unit 13. The duct system diagram data includes the direction information indicating the direction of the duct system and the external form information indicating the external form of the duct system. The external form information includes the information indicating the position of the inlet port or the blow-out port of the air conditioner or the ventilation device.

The information processing device 1 may acquire the piping system diagram data representing the piping system diagram of the target space from an external device via the acquisition unit 13. The piping system diagram data includes the direction information indicating the direction of the piping system and the external form information indicating the external form of the piping system. The piping system diagram data includes, for example, the information related to the position of an indoor unit and the thermal boundary condition of the air conditioner.

The information processing device 1 may acquire the outside air temperature time-series data of the target space, the solar radiation amount time-series data in the target space, the thickness data of fittings, and the like, from an external device via the acquisition unit 13.

The display unit 14 is a display device such as a liquid crystal display panel or an organic EL display panel. The processing unit 11 displays an image related to the three-dimensional space model on the display unit 14.

The operating unit 15 is an input device such as a mouse, a keyboard, or a touch panel that receives an operation of a user of the information processing device 1. The processing unit 11 receives, for example, editing of the three-dimensional space model by the user via the operating unit 15.

The information processing device 1 may be a server device connected to a network. The information processing device 1 may include a client device and a server device. The information processing device 1 may be configured by a plurality of computers to perform distributed processing, may be realized by a plurality of virtual machines provided in one server, or may be realized by using a cloud server. The information processing device 1 may be the terminal device 3. That is, the terminal device 3 may be configured to function as the information processing device 1.

The information processing device 1 generates the three-dimensional shape model of the target space based on the spatial shape data and the temperature distribution data acquired in association with each other.

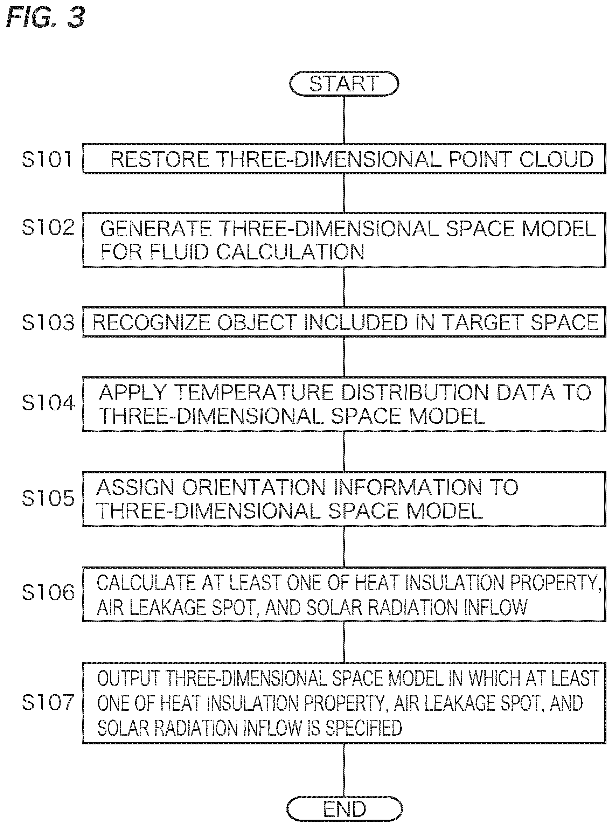

Fig. 3 is a flow chart illustrating a procedure for generating a three-dimensional shape model. The processing unit 11 of the information processing device 1 restores the three-dimensional point cloud of the target space based on the image data and the depth data (step S101). A known method is used to restore the three-dimensional point cloud. For example, a highly accurate three-dimensional point cloud can be restored by using two methods, i.e., Structure from Motion (SfM) for geometrically estimating a sparse point cloud from an input image and Multi-View Stereo (MVS) for generating a high-density point cloud based on the SfM point cloud.

The processing unit 11 generates a three-dimensional space model for fluid calculation based on the obtained three-dimensional point cloud data (step S102). For example, the processing unit 11 can use a self-position estimation technique and a line-of-sight direction estimation technique to specify the plane corresponding to a wall surface, a floor surface, or a ceiling surface of the target space, the plane corresponding to an outer surface of an object such as various devices or furniture and fixtures, and the position of each plane and generate a three-dimensional space model formed by a plurality of surfaces.

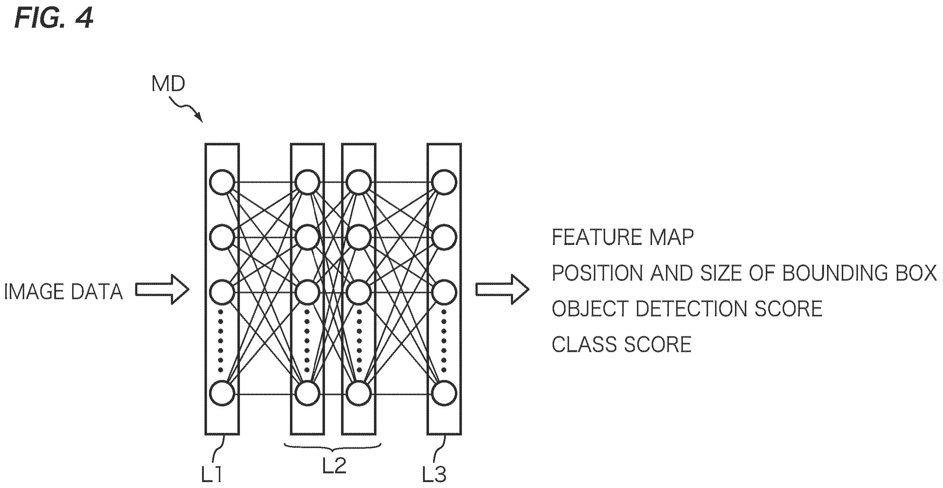

The processing unit 11 recognizes the position and the class of the object included in the target space (step S103). The type of the object to be recognized is furniture and fixtures, fittings, a person, an industrial machine, a plant, an air conditioner, a ventilation device, or the like. The furniture and fixtures include at least one of a computer, a monitor, lighting equipment, a heater, a desk, and a chair. The fittings include at least one of a window, a blind, a partition, and a door. The processing unit 11 recognizes the position and the class of the object included in the target space by using, for example, a learning model MD (see Fig. 4) of machine learning.

Fig. 4 is a schematic view illustrating a configuration example of the learning model MD for object recognition. The learning model MD includes, for example, a convolutional neural network (CNN) that has learned by deep learning. The learning model MD includes an input layer L1 to which image data of the target space is input, an intermediate layer L2 that extracts a feature value of the image data, and an output layer L3 that outputs an inference result regarding the detected object. The learning model MD is, for example, a YOLO model.

Each layer of the learning model MD has a plurality of nodes. The nodes of each layer are connected by edges. Each layer has an activation function (response function), and an edge has a weight. The value output from the node of each layer is calculated from the value of the node of the previous layer, the weight of the edge, and the activation function of the layer. The weight of the edge can be changed by learning.

The input layer L1 of the learning model MD includes a plurality of nodes that receives input of pixel values of pixels constituting the image data, i.e., the images of the target space and the surface of the object and passes the input pixel values to the intermediate layer L2.

The intermediate layer L2 includes a plurality of sets of convolution layers (CONV layers) and pooling layers and a fully connected layer. The convolution layer performs filtering on the value output from the node of the previous layer to extract a feature map. The pooling layer reduces the feature map output from the convolution layer to obtain a new feature map.

The output layer L3 includes a node that outputs a final inference result related to the object detected from the image data. The inference result includes the central coordinate position and vertical and horizontal sizes of a bounding box surrounding the object, an object detection score indicating the probability that the image surrounded by the bounding box is an image of the object, a class score indicating the probability that the object belongs to a specific class, and the like.

The output obtained from the output layer L3 includes a plurality of bounding boxes overlapping each other and, by post-processing for removing the overlapping bounding boxes, for example, non-maximum suppression (NMS) processing, the position and size of the most probable bounding box surrounding each of one or more objects included in the image of the target space, the object detection score, and the class score are obtained.

A method for generating the learning model MD will be described. First, the training data including a plurality of sets of image data of the target space including the object and the annotation file of each set of image data is prepared. The annotation file is teacher data indicating the correct value assigned to a corresponding image. Specifically, the annotation file is the data indicating the center coordinate position, the vertical and horizontal sizes, and the class of the bounding box surrounding the image of the object included in the corresponding image. The class indicates a group classified in accordance with the attribute of the object.

When the image of the training data is input to the CNN, the weight coefficient of the neural network is optimized by using a backpropagation method, an error gradient descent method, or the like, to reduce the error (the value of a predetermined loss function or error function) between the data output from the CNN and the data indicated by the teacher data so that the learning model MD can be generated.

In the example of Fig. 4, the YOLO learning model MD has been described as an example, but the learning model MD may be configured using R-CNN, Fast R-CNN, Faster R-CNN, other CNNs, vision transformer, or the like. Alternatively, the learning model MD using an algorithm such as decision tree, random forest, or support vector machine (SVM) may be used. Alternatively, the learning model MD may be configured by combining the plurality of algorithms described above.

When the object is recognized in step S103, the processing unit 11 may assign a boundary condition to the recognized object. The position at which the boundary condition is set in the three-dimensional space model is specified based on the position and dimension of the object recognized in step S103 and the three-dimensional point cloud restored in step S101. The value assigned as the boundary condition may be set in advance for each object. For example, parameters such as surface temperature, pressure, Dirichlet boundary condition of flow velocity, Neumann boundary condition, sensible heat, latent heat, thermal conductivity, thermal resistivity, air volume, wind direction, and wind velocity may be set in advance for each object.

When the image data includes an air control port of an air conditioner or a ventilation device, the processing unit 11 may determine whether the air control port is an inlet port or a blow-out port. For the determination, a learning model by machine learning may be used. When the duct system diagram data is obtained for the target space, the inlet port and the blow-out port may be determined based on the duct system diagram data. Further, the inlet port and the blow-out port may be discriminated by measuring the temperature of the inlet port or the blow-out port and the temperature of the ceiling surface based on the temperature distribution data including the air control port. Further, a thermal boundary condition may be assigned to the three-dimensional space model in accordance with a determination result of the inlet port and the blow-out port.

When the image data includes the piping system of the air conditioner, the processing unit 11 may specify the thermal boundary condition of the piping system and may assign the thermal boundary condition to the three-dimensional space model. When the piping system diagram data is obtained for the target space, the thermal boundary condition of the piping system may be assigned to the three-dimensional space model with reference to the piping system diagram data.

After the object is recognized in step S103, the processing unit 11 applies the temperature distribution data to the three-dimensional space model (step S104). The processing unit 11 specifies the temperature distribution for each recognized object and associates the recognized object with the specified temperature distribution, thereby applying the temperature distribution data to the three-dimensional space model. Further, the processing unit 11 assigns information (orientation information) based on the acquired orientation data to the three-dimensional space model (step S105). The storage unit 12 stores the three-dimensional space model to which the temperature distribution and the orientation information are assigned.

The processing unit 11 calculates at least one of the heat insulation property, the air leakage spot, and the solar radiation inflow in the target space (step S106). An overall heat transmission coefficient can be used as an index of heat insulation property. The processing unit 11 can calculate the overall heat transmission coefficient based on the temperature distribution data, the outside air temperature time-series data of the target space, the solar radiation amount time-series data, the thickness data of the fittings, and the like. The processing unit 11 can perform airflow analysis using the three-dimensional space model generated in step S105 and specify an air leakage spot in the target space. The processing unit 11 can calculate the solar radiation inflow based on the material of the window recognized as an object and the solar radiation amount time-series data.

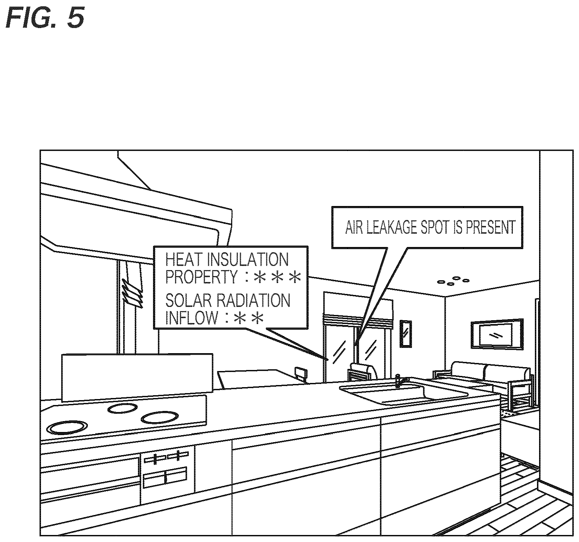

The processing unit 11 calculates at least one of the heat insulation property, the air leakage spot, and the solar radiation inflow in the target space and outputs the three-dimensional space model in which at least one of the heat insulation property, the air leakage spot, and the solar radiation inflow is specified (step S107). The processing unit 11 can cause the display unit 14 to display, as an image, the three-dimensional space model in which for example at least one of the heat insulation property, the air leakage spot, and the solar radiation inflow is specified. Fig. 5 is a schematic view illustrating a display example of the three-dimensional space model. The example of Fig. 5 represents the three-dimensional space model of a kitchen and a living room and illustrates the calculation result of the heat insulation property, the air leakage spot, and the solar radiation inflow for the window object included in the three-dimensional space model. The processing unit 11 displays the calculated heat insulation property (overall heat transmission coefficient) and solar radiation inflow as numerical information and displays the air leakage spot ("air leakage spot is present" in the example of Fig. 5) as text information.

For simplification, the configuration in which the heat insulation property, the air leakage spot, and the solar radiation inflow are calculated for one object (window) has been described in the example of Fig. 5, but the heat insulation property, the air leakage spot, and the solar radiation flow rate may be calculated for a plurality of objects (for example, walls, air conditioners, or ducts) and may be displayed on the three-dimensional space model in a superimposed manner.

According to the embodiment, since the temperature distribution is obtained for each object, the temperature distribution may be displayed on each object in a superimposed manner. For example, the processing unit 11 may generate a color contour map based on the temperature distribution data and may display the generated color contour map on the object in a superimposed manner.

Fig. 5 illustrates the configuration in which the display unit 14 displays the data (target space data) of the three-dimensional space model in which at least one of the heat insulation property, the air leakage spot, and the solar radiation inflow is specified, but the target space data may be stored in the storage unit 12, or the target space data may be transmitted to an external device.

The processing unit 11 may perform at least one of device selection, device arrangement, and airflow control of the air conditioner in accordance with the location in the target space based on at least one of the calculated heat insulation property, air leakage spot, and solar radiation inflow.

The processing unit 11 may propose repair of the target space based on at least one of the calculated heat insulation property, air leakage spot, and solar radiation inflow.

For example, the processing unit 11 may compare the calculated heat insulation property with the pre-set reference value and, when the calculated heat insulation property is lower than the reference value, may propose repair to increase the heat insulation property. In addition, the processing unit 11 may determine the presence or absence of an air leakage spot and, when it is determined that there is an air leakage spot, may propose repair to reduce air leakage. Further, the processing unit 11 may compare the calculated solar radiation inflow with the pre-set reference value and, when the calculated solar radiation inflow is higher than the reference value, may propose repair so as to reduce the solar radiation inflow.

As described above, according to the first embodiment, the spatial shape data of the target space and the temperature distribution data of the target space are acquired in association with each other, and the three-dimensional space model is generated based on the acquired spatial shape data and temperature distribution data. According to the first embodiment, the heat insulation property, the air leakage spot, and the solar radiation inflow are specified in the three-dimensional space model, and thus these pieces of information can be visually provided.

### (Second Embodiment)

According to a second embodiment, the configuration will be described, in which an air-conditioning load for air-conditioning the target space is estimated and a device capacity and a model of the air conditioner are selected based on an estimation result.

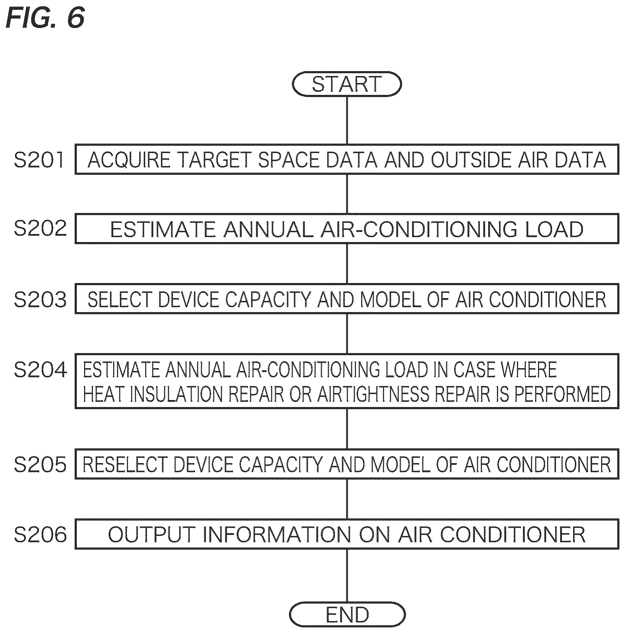

Fig. 6 is a flow chart illustrating a procedure for selecting an air conditioner executed by the information processing device 1 according to the second embodiment. The processing unit 11 of the information processing device 1 acquires the target space data and the outside air data (step S201). The target space data is calculated using the method described in the first embodiment. The target space data may include structure data such as the area of a structure (a wall surface or a glass surface) of a building, the overall heat transmission coefficient, and solar radiation inflow. Furthermore, the target space data may include information on the number of factors and the degree of influence caused by an increase or decrease in the room temperature. For example, the indoor data may include information such as the number of people in a room, the power consumption per unit area in lighting, the ventilation amount of ventilation equipment, the number of heat source devices installed in the room, and the amount of heat generated. The heat source device is, for example, an outlet, an OA device, or a control panel. The outside air data is, for example, information on an annual outside air temperature and is obtained from an external weather server or the like.

The processing unit 11 estimates the annual air-conditioning load based on the structure data, the indoor data, and the outside air data acquired in step S201 (step S202). The processing unit 11 estimates the air-conditioning load by adding elements caused by an increase in the indoor temperature during cooling and a decrease in the indoor temperature during heating.

For example, the processing unit 11 calculates, as a structure load, the structure area × the overall heat transmission coefficient × the building inside and outside temperature difference. In addition, the processing unit 11 calculates, as an indoor load, the lighting load (= the room area × the power consumption of the lighting equipment per unit area), the human body load (= the room area × the population density × the sensible heat amount or latent heat amount per person), and the heat source device load (= the number of heat source devices × the amount of heat generated). Furthermore, the processing unit 11 calculates, as an outside air load, the draft load (= the building inside and outside enthalpy difference × the air volume × the air density) and the ventilation fan load (= the building inside and outside enthalpy difference × the air volume × the air density × the total heat exchange rate). The processing unit 11 estimates the annual air-conditioning load by adding the structure load, the indoor load, and the outside air load.

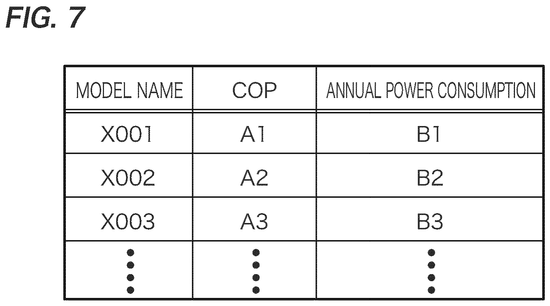

The processing unit 11 selects the device capacity and the model of the air conditioner to be installed in accordance with the estimated annual air-conditioning load (step S203). In the information processing device 1, the storage unit 12 includes, for example, an air conditioner table that stores a model name, a coefficient of performance (COP), and an annual power consumption in association with each other. Fig. 7 is a conceptual diagram of the air conditioner table. The COP represents the cooling and heating capacity (kW) per power consumption of 1 kW under a predetermined temperature condition, and the larger the numerical value, the more efficient the energy consumption and the higher the energy conservation of the device. The processing unit 11 selects an air conditioner (model) in which the value of the COP × the annual power consumption obtained from the air conditioner table is closest to the value of the annual air-conditioning load estimated in step S202.

The processing unit 11 further estimates the annual air-conditioning load in a case where heat insulation repair or airtightness repair is performed (step S204). The calculation method is the same as that in step S202, and the processing unit 11 calculates the structure load, the indoor load, and the outside air load for the space in which heat insulation repair or airtightness repair has been performed and adds these loads to estimate the annual air-conditioning load.

The processing unit 11 reselects the device capacity and the model of the air conditioner to be installed in accordance with the estimated annual air-conditioning load (step S205). The processing unit 11 may select an air conditioner (model) in which the value of the COP × the annual power consumption obtained from the air conditioner table is closest to the value of the annual air-conditioning load estimated in step S204.

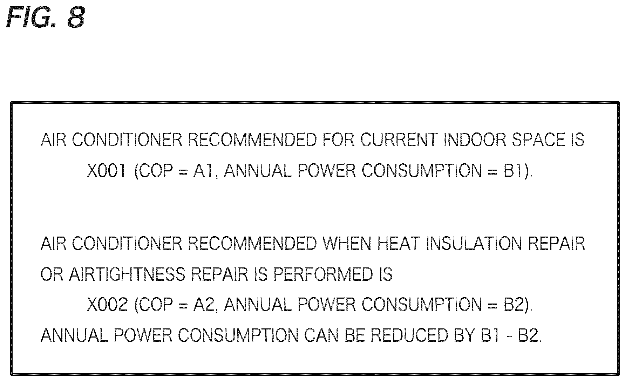

The processing unit 11 outputs information on the selected air conditioner (step S206). Fig. 8 is a schematic view illustrating an output example of the air conditioner information. Fig. 8 illustrates the example in which two types of information of the air conditioner recommended for the current indoor space and the air conditioner recommended when heat insulation repair or airtightness repair is performed are displayed.

The processing unit 11 may receive a selection as to which of the initial cost of the air conditioner, the running cost, the temperature condition, the humidity condition, and the comfort of the target space is prioritized and may recommend heat insulation repair or airtightness repair in accordance with the received selection.

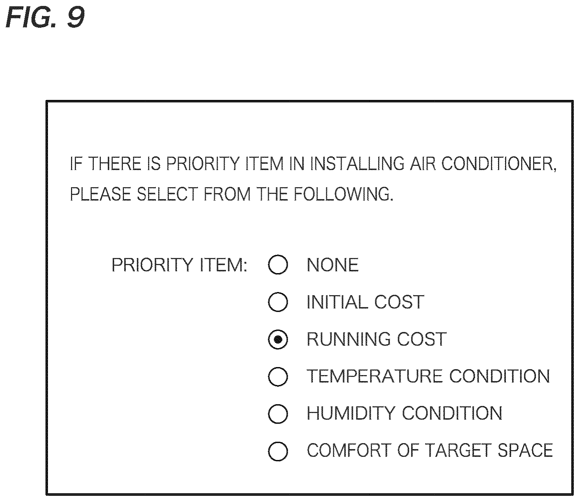

Fig. 9 is a schematic view illustrating a priority item selection screen. The example of Fig. 9 illustrates a selection screen on which radio buttons are provided to receive a selection of any one of no priority item, initial cost of the air conditioner, running cost, temperature condition, humidity condition, and comfort of the target space. When any one of the running cost, the temperature condition, the humidity condition, and the comfort of the target space is selected as a priority item, the processing unit 11 recommends heat insulation repair or airtightness repair. Specifically, the processing unit 11 causes the display unit 14 to display the text information indicating that heat insulation repair or airtightness repair is recommended. It may be determined whether to recommend heat insulation repair or airtightness repair based on the target space data calculated according to the first embodiment. That is, when the heat insulation property of the target space is lower than the reference value, heat insulation repair may be recommended, and when it is determined that there is air leakage, airtightness repair may be recommended. Alternatively, the processing unit 11 may notify the user terminal that heat insulation repair or airtightness repair is recommended. When the running cost is selected on the selection screen of Fig. 9, the processing unit 11 determines that heat insulation repair and airtightness repair are not recommended. In this case, the processing unit 11 may not output the recommendation information.

As described above, according to the second embodiment, the air-conditioning load can be calculated from the target space data and the outside air data, and the information of the air conditioner recommended for the target space can be presented to the user.

It should be understood that the embodiments disclosed herein are illustrative and non-restrictive in every respect. The scope of the present invention is defined by the scope of claims rather than by the meaning described above and is intended to include any modifications within the scope and meaning equivalent to the scope of claims.

### [Description of Reference Numerals]

- 1: INFORMATION PROCESSING DEVICE
- 2: MEASUREMENT DEVICE
- 3: TERMINAL DEVICE
- 11: PROCESSING UNIT
- 12: STORAGE UNIT
- 13: ACQUISITION UNIT
- 14: DISPLAY UNIT
- 15: OPERATING UNIT
- 21: RGB SENSOR
- 22: DEPTH SENSOR
- 23: IR PROJECTOR
- 24: INFRARED CAMERA
- 31: ORIENTATION SENSOR
- RM: RECORDING MEDIUM
- PG: PROGRAM

## Claims

1. An information processing device comprising an acquisition unit that acquires spatial shape data of a target space obtained by measuring the target space and temperature distribution data obtained by measuring a temperature distribution of the target space in association with each other.

2. The information processing device according to claim 1, comprising a processing unit that generates a three-dimensional space model of the target space based on the spatial shape data and the temperature distribution data acquired in association with each other by the acquisition unit.

3. The information processing device according to claim 2, wherein the processing unit outputs target space data in which at least one of heat insulation property, an air leakage spot, and solar radiation inflow in the target space is specified.

4. The information processing device according to claim 3, wherein
the acquisition unit acquires outside air data, and
the processing unit calculates at least one of the heat insulation property, the air leakage spot, and the solar radiation inflow based on the acquired outside air data.

5. The information processing device according to claim 4, wherein the processing unit performs at least one of device selection, device arrangement, and airflow control of an air conditioner in accordance with a location in the target space based on at least one of the calculated heat insulation property, the calculated air leakage spot, and the calculated solar radiation inflow.

6. The information processing device according to claim 4, wherein the processing unit proposes repair of the target space based on at least one of the calculated heat insulation property, the calculated air leakage spot, and the calculated solar radiation inflow.

7. The information processing device according to claim 3, wherein
the acquisition unit acquires outside air data, and
the processing unit
estimates an air-conditioning load for air-conditioning the target space based on the acquired outside air data and the target space data,
selects a device capacity and a model of an air conditioner based on an estimation result, and
estimates power consumption of the selected air conditioner.

8. The information processing device according to claim 6, wherein the processing unit estimates power consumption of an air conditioner in a case where heat insulation repair or airtightness repair of the target space is performed.

9. The information processing device according to claim 6, wherein
the processing unit
receives a selection as to which of an initial cost of the air conditioner, a running cost, a temperature condition, a humidity condition, and comfort of the target space is prioritized, and
recommends heat insulation repair or airtightness repair in accordance with the received selection.

10. An information processing method causing a computer to execute a process comprising acquiring spatial shape data of a target space obtained by measuring the target space and temperature distribution data obtained by measuring a temperature distribution of the target space in association with each other.

11. A computer program causing a computer to execute a process comprising acquiring spatial shape data of a target space obtained by measuring the target space and temperature distribution data obtained by measuring a temperature distribution of the target space in association with each other.
